# EUROPEAN PATENT APPLICATION

(11) **EP 2 533 549 A1**
(43) Date of publication of application: **12.12.2012**
(21) Application number: 11305695.6
(22) Date of filing: 07.06.2011
(51) Int. Cl.: H04Q 11/00, H04B 10/08

(54) **Fault detector for optical network communication system**

(71) Applicant: Alcatel Lucent, 75007 Paris (FR)
(72) Inventor: Dupuis, Nicolas, 4000 Liege (BE); Meersman, Stijn, 9250 Waasmunster (BE)
(74) Representative: ALU Antw Patent Attorneys

(57) **Abstract**

A fault detection method that comprises the steps of collecting operational parameters of the optical network, collecting information about the structure of the optical network, providing diagnosis outputs by a diagnosis engine analyzing the structure information and the operational parameters, and deriving optical network faults from the diagnosis outputs. The collected operational parameters and the collected structure information are preferably stored in a database (DB). The operational parameters are related to equipment (type), Quality-of-Service (BER) and/or architecture (ID) of the optical network. The optical network faults derived from the diagnosis outputs may concern equipment issues, interoperability problems and/or physical defects. The diagnosis engine generates the diagnosis outputs by using decision trees, Bayesian network techniques and/or multivariate classification techniques.

## Description

The present invention relates to a fault detection method for an optical network in a communication system.

With the uprising market development of IPTV solutions, Video-On-Demand offers or Triple-play services, both the system performances and the customer support of a telecommunication network becomes more and more exigent. As the physical link, which transports the information through wire lines or optical fibers up to the end user, is known to be the bottle neck for the Quality of Service QoS, a software application, called 5530 Network Analyzer™ is currently being developed to both remotely diagnose sources of physical problems and take actions to improve performances. This helps the operators to gain in service quality as well as to save money and time by not involving human interventions for all types of requests. Additional information concerning the 5530 Network Analyzer can be found on the Internet at
< http://www.motive.com/products/display.php/network-analyzer-fiber >.

An optical fiber version of the network analyzer is known as NA-F, e.g. the 5530 NA-F developed by Alcatel-Lucent™. It has been developed to monitor some Passive Optical Network PON physical layer parameters as well as to estimate some of the physical QoS performances.

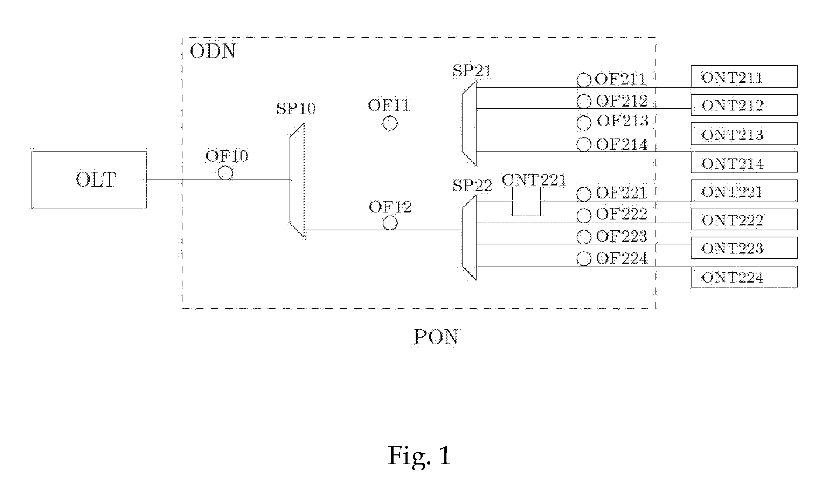

An example of an optical network, and more particularly of a Passive Optical Network PON is shown at **Fig. 1** and consists of an Optical Line Terminator OLT located at the Central Office (CO) and a set of associated Optical Network Terminals ONT located at the customer premises. Between them lies an Optical Distribution Network ODN comprised of fibers and passive splitters or couplers. The Optical Line Termination OLT provides the network-side interface of an optical access network and is connected to one or more Optical Distribution Networks ODN.

In order to identify defects occurring at the level of the Passive Optical Network PON physical layer, an existing technique is the Optical Time Domain Reflectometry OTDR. Briefly, this technique allows identifying some physical defects, such as bad connectors or broken fibers, as well as their potential location by inspecting the reflected signals.

An improved version of OTDR is the Optical Time Domain Reflectometry "Embedded" in the current communication signal and called Embedded-OTDR. The Embedded-OTDR is not a completely invasive measurement solution as this type of measurements, continuously modulated over the communication signal, can be easily filtered out without significant impact on performances.

However, the drawbacks are the high level of difficulty for interpreting correctly the reflected traces and to infer about the presence and nature of physical defects. Also, when the topology of the Passive Optical Network PON is symmetrically organized, as shown at Fig. 1, it gets harder to precisely localize in which part (or branches) of the PON potential defects take place. Even worst, after several splitters (or even after the main one), it gets difficult to correctly measure the reflected optical signals and to therefore extract knowledge from these traces. Moreover, to be accurate, process of averaging the reflected signals is required within long periods of time, e.g. several hours.

Finally, as by definition, reflectometry is a "single-ended" way of performing measurement, no information about the impact or about possible interoperability problems can be deduced using such way of measurements.

In other words, optical time domain reflectometry OTDR and Embedded-OTDR allow to identify potential defects as well as to localize them in a Passive Optical Network PON. However, to provide accurate results, the main issue is that optical time domain reflectometry OTDR and Embedded-OTDR require quite long monitoring periods.

Another disadvantage of the prior-art solution is that it mainly focuses on the identification of physical problem occurring on one particular optical line terminator OLT port by comparing current measurement data with respect to previous measurements, test system data or theoretical considerations performed on the same OLT port.

Development of algorithms and features in order to detect, discriminate and localize different types of problems occurring in an optical network, and more particularly in a Gigabit-per-second Passive Optical Network GPON is in the core of the upcoming releases & strategy.

An object of the present invention is to provide a fault detection method able to face the above issues and to take benefit from "dual-ended" measurements for diagnosis.

According to a characterizing embodiment of the invention, this object is achieved due to the fact that said method comprises the steps of
- collecting operational parameters of said optical network,
- collecting information about the structure of said optical network,
- providing diagnosis outputs by a diagnosis engine analyzing the structure information and the operational parameters, and
- deriving optical network faults from said diagnosis outputs.

The diagnosis outputs provided by the diagnosis engine are new types of problem related solutions obtained without impacting the service, i.e. by means of non-intrusive diagnosis technique.

The invention deals with network-wide data coming from many optical line terminator OLT ports from which knowledge is self-extracted, without any theoretical assumptions or previous and/or external-tools measurements. This allows providing broader types of diagnosis outputs and thereby optical network faults, and to be adaptive and thus more reliable and time efficient.

The advantages of the present invention with respect to the above mentioned optical time domain reflectometry OTDR or Embedded-OTDR technique, can be identified as follows:
- not only physical defects can be identified,
- statements about problems occurring after the main splitter can still be performed,
- network-wide data collection allows more general diagnosis (root cause analysis) and is not limited to a given OLT port,
- location of physical defects can be inferred,
- no need to monitor the port during a long period, only one single collection of operational data is required,
- quantification of the impact is possible.

Another characterizing embodiment of the present invention is that said method further comprises the steps of storing the collected operational parameters and the collected structure information in a database.

In this way, real-world data, retrieved directly from the operator's network and that suitably characterize it, can be used to learn automatically models useful for diagnosis purposes. This provides "personalized" expertise that is generally more accurate moreover requiring limited human resources.

It is to be noted that the Patent Application US 2010/0150546-A1 of Kapil Shrikhande et al., filed on December 15, 2008 and published on June 17, 2010 discloses a computerized system and method for managing a passive optical network PON. The system includes a detection and analysis module adapted for receiving uploaded measurement data from an optical line terminal OLT and at least one optical network terminal ONT, and at least one of technical tools data, service failure data, and outside plant data. The detection and analysis module is adapted for determining a source of failure or potential failure in the PON by correlating the uploaded measurement data and the at least one of technical tools data and service failure data with information stored in a memory medium for the OLT and each ONT.

With reference to this known management system based on GPON services, the advantages of the present invention are:
- to be self-adaptive to any operator specific network,
- to learn automatically from the operational data without the help of theoretical models or external tool measurements,
- no need for previous measurements, whereby it is easier and more time-efficient,
- much broader type of diagnosis (not only physical defects),
- really the root cause identification, not only the reporting of "a physical layer problem" (discrimination between problems, identification of generic type of problems such as bad equipments),
- as data from different optical line terminal OLT ports are processed together, inference about more generic problems, such as device interoperability, can be deduced.

Also another characterizing embodiment of the present invention is that said operational parameters are related to of the equipment, to the Quality-of-Service and/or to the architecture of said optical network.

The present fault detection method provides an automatic root cause analysis solution to an operator for problems occurring in a PON network. This allows to not only make the diagnosis of physical defects present on a given OLT port (together with their respective ONTs) but also to provide broader types of root cause identification, such as equipment type issues or interoperability problems.

Again another characterizing embodiment of the present invention is that said diagnosis outputs are generated by said diagnosis engine using decision trees, Bayesian network techniques or multivariate classification techniques.

The use of a snapshot view of network-wide field data allows such type of diagnosis without the use of theoretical models or previous and/or external tools measurements. Indeed, rules and models are directly learned using the database.

Moreover, as this technique is self-adaptive to the current optical network, results get more accurate and more reliable.

The present invention also relates to a diagnosis engine for fault detection in an optical network of a communication system.

This diagnosis engine is adapted to collect operational parameters and information about the structure of said optical network, and is adapted to provide diagnosis outputs from which optical network faults are derived.

More generally, this diagnosis engine is preferably adapted to operate according to the fault detection method of the present invention, and has all the advantages thereof.

Further characterizing embodiments of the present diagnosis engine and fault detection method are mentioned in the appended claims.

It is to be noticed that the terms "comprising" or "including", used in the claims, should not be interpreted as being restricted to the means listed thereafter. Thus, the scope of an expression such as "a device comprising means A and B" should not be limited to an embodiment of a device consisting only of the means A and B. It means that, with respect to embodiments of the present invention, A and B are essential means of the device.

Similarly, it is to be noticed that the term "coupled", also used in the claims, should not be interpreted as being restricted to direct connections only. Thus, the scope of the expression such as "a device A coupled to a device B" should not be limited to embodiments of a device wherein an output of device A is directly connected to an input of device B. It means that there may exist a path between an output of A and an input of B, which path may include other devices or means.

The above and other objects and features of the invention will become more apparent and the invention itself will be best understood by referring to the following description of an embodiment taken in conjunction with the accompanying drawings wherein:
**Fig. 1** shows an example of a symmetrical optical network;
**Figs. 2 to 6** show an optical network with different optical network faults as detected by the method and device of the invention; and
**Fig. 7** represents a possible implementation of the method and device of the invention.

The fault detection method and diagnosis engine of the present invention is used to detect faults in an optical network of a communication system, and more particularly but not exclusively in a Passive Optical Network PON or Gigabit-per-second Passive Optical Network GPON.

The main idea is to collect network-wide communication operational parameters or data in order to build therewith, together with information about the structure of the optical network, a knowledge system able to characterize optical network physical layer defects as well as to perform a root cause analysis, e.g. to make the distinction between a physical degradation, an equipment generic problem or interoperability issues.

To this end, the knowledge system, hereafter also called expert system, is created and used by a diagnosis engine using a fault detection method which comprises a training phase, a monitoring phase and a testing phase.

The training or modelisation phase comprises the steps of collecting operational parameters or data of the optical network and collecting information about the structure of this optical network. They are used to train the expert system in order to learn classification models.

During the monitoring phase, updated data get entered into the trained expert system in order to provide proactive diagnosis or are used to keep the data base updated.

The testing phase retrieve some operational data of a given port to feed the expert system; expert system that gives a diagnosis about optical network faults concerning equipment issues, interoperability problems and/or physical defects of the optical network, as will be explained in more detail later.

By characterization, when it is meaningful, clues about defect location are also reported. In practice, once the expert system has been trained using real and network-wide field data, it gets able to suitably combine the operational parameters and structure in order to give such diagnostic for requested PONs without requiring additional measurements and without service interruption. This solution allows also giving hints about QoS impact.

An example of an optical network, and more particularly of a symmetrical Passive Optical Network PON is shown at **Fig. 1****.** The optical network consists of an Optical Line Terminator OLT located at the Central Office (CO) of the communication system and one or more sets of associated Optical Network Terminals ONT211-214; ONT221-224 located at the customer premises (CPE) and that may be of different types. Between them lies an Optical Distribution Network ODN comprising optical fibers OF10; OF11-12 and passive splitters or couplers SP10; SP21-22.

In more detail, the optical distribution network ODN comprises a splitter SP10 to which the optical fiber OF10 is connected, the other end of the optical fiber OF10 being connected to the optical line terminator OLT. The splitter SP10 is further connected to splitters SP21 and SP22 via respective optical fibers OF11 and OF12. The splitter SP21 is connected to the optical network terminals ONT211 to ONT214 via respective optical fibers OF211 to OF214, whilst the splitter SP22 is coupled to the optical network terminal ONT221 via a passive optical connector CNT221 and an optical fiber OF221, and is connected to the optical network terminals ONT222 and ONT224 via respective optical fibers OF222 to OF224.

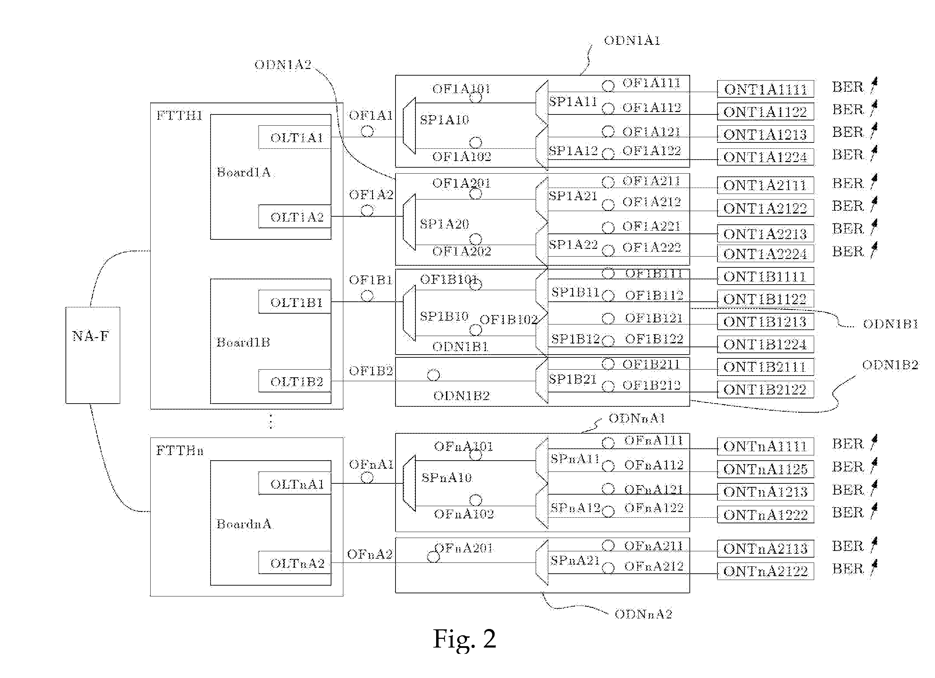

Another example of optical network is shown at the **Figs. 2 to 6****.** Therein, a massive data collection can be performed by a diagnosis engine embedded in an optical fiber version NA-F of a network analyzer application.

The optical network analyzer NA-F is connected to several optical Digital Subscriber Line Access Multiplexer DSLAM such as Fiber To The Home optical fiber distribution systems FTTH1 to FTTHn, each comprising one or more boards Board 11, Board12 to Boardn1 respectively.

Each board comprises two Optical Line Terminator OLT which are each coupled to a set of Optical Network Terminals ONT via an optical fiber and an Optical Distribution Network ODN.

In the example of the **Figs. 2 to 6****,** the optical network analyzer NA-F is connected to several Fiber To The Home optical fiber distribution systems FTTH1 to FTTHn.

The Fiber To The Home optical fiber distribution system FTTH1 comprises two boards of different type: Board1A of board type-A and Board1B of board type-B.

Board1A has a first optical line terminator OLT1A1 connected to an optical distribution network ODN1A1 via an optical fiber OF1A1 and a second optical line terminator OLT1A2 connected to another optical distribution network ODN1A2 via another optical fiber OF1A2.

The optical distribution network ODN1A1 is further connected to four optical network terminals ONT1A1111 of type-1, ONT1A1122 of type-2, ONT1A1213 of type-3 and ONT1A1224 of type-4, whilst the optical distribution network ODN1A2 is further connected to four optical network terminals ONT1A2111 of type-1, ONT1A2122 of type-2, ONT1A2213 of type-3 and ONT1A2224 of type-4.

In more detail, the optical distribution network ODN1A1 comprises a splitter SP1A10 to which the optical fiber OF1A1 is connected and which is further connected to splitters SP1A11 and SP1A12 via respective optical fibers OF1A101 and OF1A102. The splitter SP1A11 is connected to the optical network terminals ONT1A1111 and ONT1A1122 via respective optical fibers OF1A111 and OF1A112, whilst the splitter SP1A12 is connected to the optical network terminals ONT1A1213 and ONT1A1224 via respective optical fibers OF1A121 and OF1A122. Similarly, the optical distribution network ODN1A2 comprises a splitter SP1A20 to which the optical fiber OF1A2 is connected and which is further connected to splitters SP1A21 and SP1A22 via respective optical fibers OF1A201 and OF1A202. The splitter SP1A21 is connected to the optical network terminals ONT1A2111 and ONT1A2122 via respective optical fibers OF1A211 and OF1A2122, whilst the splitter SP1A22 is connected to the optical network terminals ONT1A2213 and ONT1A2224 via the respective optical fibers OF1A221 and OF1A222.

Board1B of the Fiber To The Home optical fiber distribution system FTTH1 has a first optical line terminator OLT1B1 connected to an optical distribution network ODN1B1 via an optical fiber OF1B1 and a second optical line terminator OLT1B2 connected to another optical distribution network ODN1 B2 via another optical fiber OF1 B2.

The optical distribution network ODN1B1 is further connected to four optical network terminals ONT1B1111 of type-1, ONT1B1122 of type-2, ONT1B1213 of type-3 and ONT1B1224 of type-4, whilst the optical distribution network ODN1B2 is further connected to two optical network terminals ONT1 B2111 of type-1 and ONT1 B2122 of type-2.

In more detail, the optical distribution network ODN1B1 comprises a splitter SP1B10 to which the optical fiber OF1B1 is connected and which is further connected to splitters SP1B11 and SP1B12 via respective optical fibers OF1B101 and OF1B102. The splitter SP1B11 is connected to the optical network terminals ONT1B1111 and ONT1B1122 via respective optical fibers OF1 B111 and OF1 B112, whilst the splitter SP1 B12 is connected to the optical network terminals ONT1B1213 and ONT1B1224 via respective optical fibers OF1B121 and OF1B122. The optical distribution network ODN1 B2 comprises a splitter SP1B21 to which the optical fiber OF1B2 is connected and which is further connected to the optical network terminals ONT1B2111 and ONT1 B2122 via respective optical fibers OF1 B211 and OF1 B212.

Finally, the Fiber To The Home optical fiber distribution system FTTHn comprises one board BoardnA of board type-A.

BoardnA has a first optical line terminator OLTnA1 connected to an optical distribution network ODNnA1 via an optical fiber OFnA1 and a second optical line terminator OLTnA2 connected to another optical distribution network ODNnA2 via another optical fiber OFnA2.

The optical distribution network ODNnA1 is further connected to four optical network terminals ONTnA1111 of type-1, ONTna1125 of type-5, ONTnA1213 of type-3 and ONTnA1222 of type-2, whilst the optical distribution network ODNnA2 is further connected to two optical network terminals ONTnA2113 of type-3 and ONTnA2122 of type-2.

In more detail, the optical distribution network ODNnA1 comprises a splitter SPnA10 to which the optical fiber OFnA1 is connected and which is further connected to splitters SPnA11 and SPnA12 via respective optical fibers OFnA101 and OFnA102. The splitter SPnA11 is connected to the optical network terminals ONTnA1111 and ONTnA1125 via respective optical fibers OFnA111 and OFnA112, whilst the splitter SPnA12 is connected to the optical network terminals ONTnA1213 and ONTnA1222 via respective optical fibers OFnA121 and OFnA122. The optical distribution network ODNnA2 comprises a splitter SPnA21 to which the optical fiber OFnA2 is connected and which is further connected to the optical network terminals ONTnA2113 and ONTnA2122 via respective optical fibers OFnA211 and OFnA212.

It is to be noted that in practice, among others, physical layer operational data related to PON belonging to each "optical DSLAM", which can be Fiber To The Node FTTN, Fiber To The Home FTTH, or Fiber To The x FTTx (where x can be users, curb, building, ...) can be collected, imported and processed by the diagnosis engine of the optical network analyzer NA-F. Such amount of real-world & network-wide data can be extensively used for knowledge discovery and therefore leads to propose diagnosis systems.

An embodiment of the fault detection method or data analysis realized by the diagnosis engine resides in the detection and location of potential physical defects, such as broken fibers or bad connectors, with respect to different types of equipment and interoperability problems.

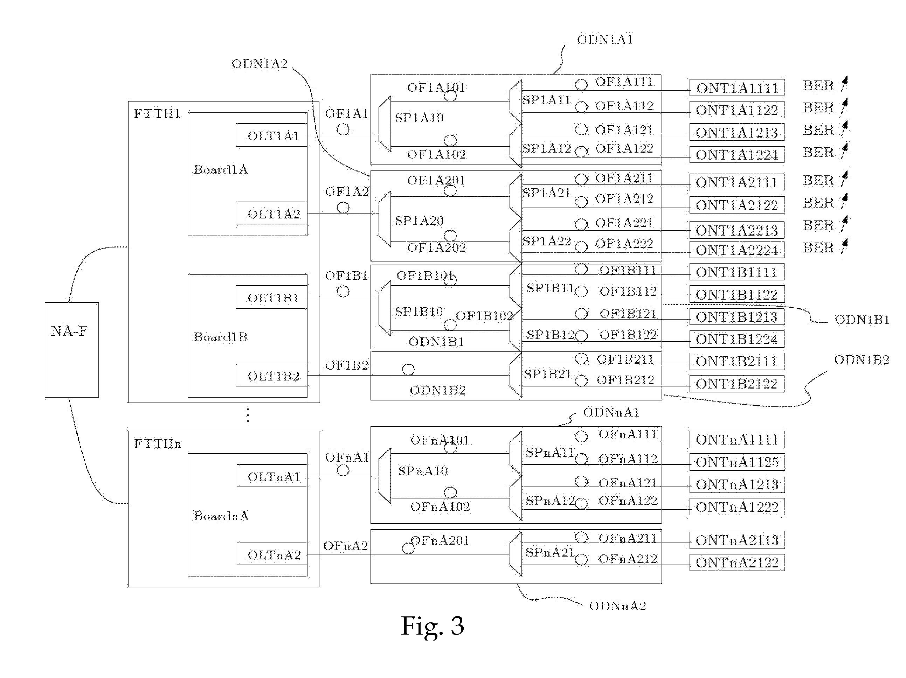

In more details, the different types of problems together with their symptoms seen in operational data can be defined as:
- Board defect (by design): a given type of board, feeding different kind of ONTs, presents, in most of the PON they are connected, a slightly but significantly increasing Bit Error Rate (BER) when there is no specific problem for other types of boards in similar PONs. Conceptually, as shown at **Fig. 2****,** boards presenting by-design defects (here type-A) can be identified by a slight increase in the BER in the communication with most of their ONTs with respect to low and stable BER presented by ONTs connected to other boards;
- Corrupted/ Damaged board: a particular board, feeding different kind of ONTs, presents, in its respective particular PON, slightly but significantly increasing Bit Error Rate (BER) when boards of the same type does not present such significant increase in their BER. As shown at **Fig. 3****,** corrupted board can be identified by a slight increase in the BER in the communication with most of its ONTs belonging to its respective PON with respect to low and stable BER presented by ONTs connected to other boards, whatever they are from the same type or not;

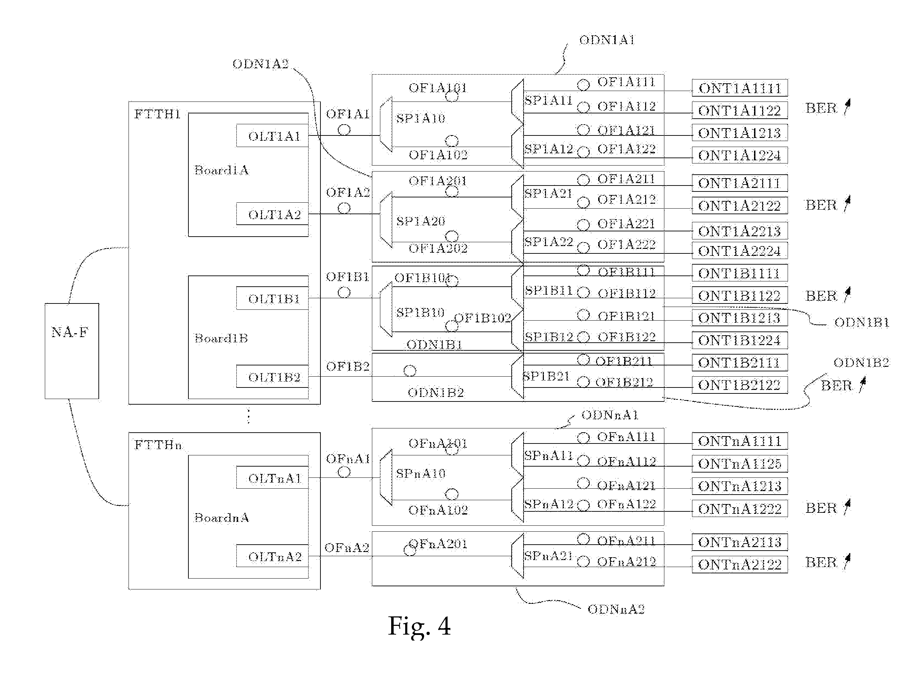

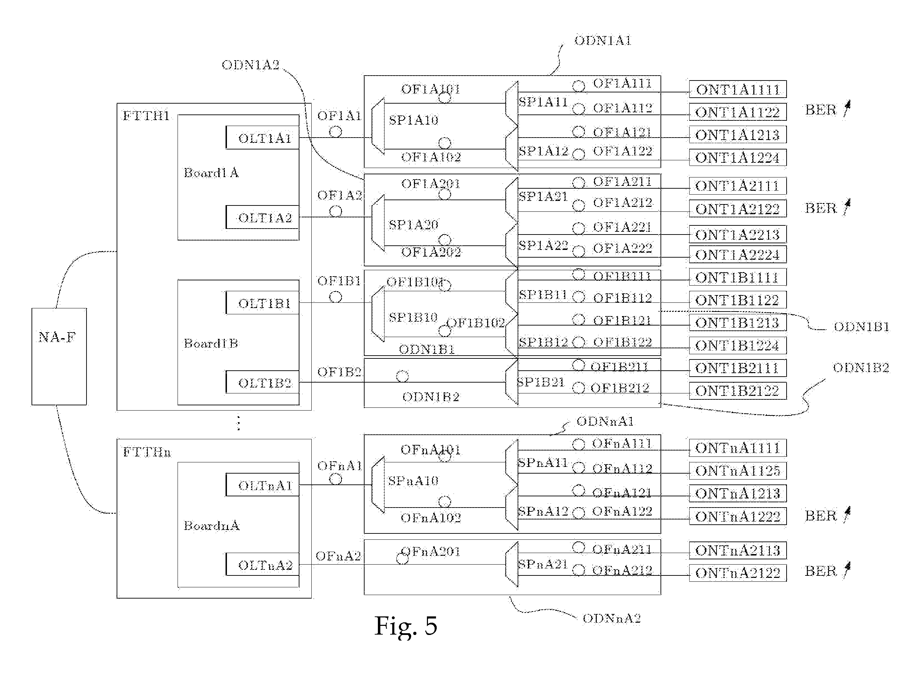

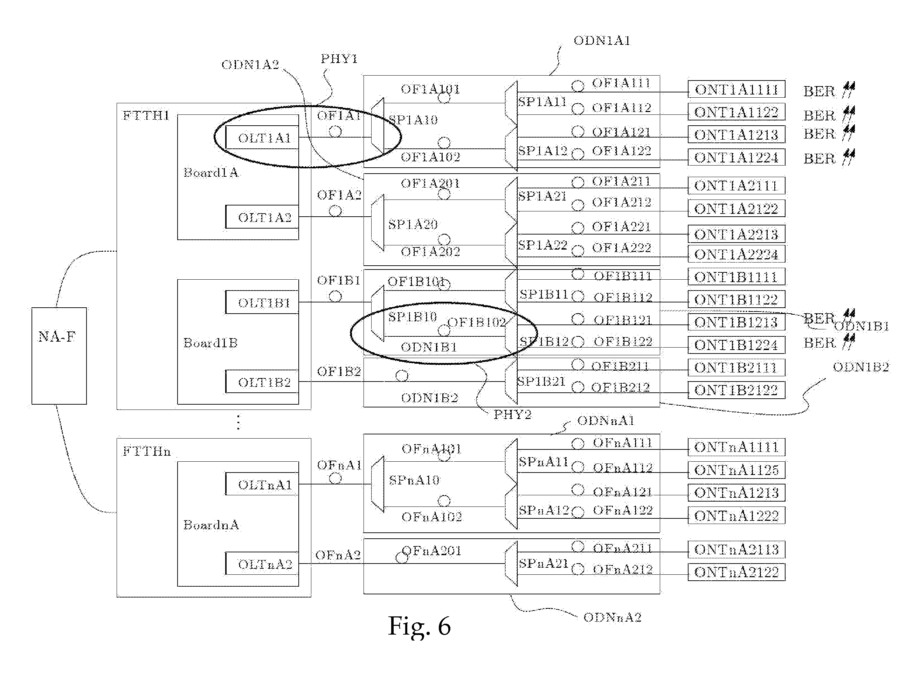

- ONT defect (by design): a given type of ONT, fed by different kind of board types, presents, in most of the PON they are connected, a slightly but significantly increasing Bit Error Rate (BER) when there is no specific problem for other types of ONTs in similar PONs. Conceptually, as shown at **Fig. 4**, ONT type presenting defects can be identified by an slight increase in the BER in the communication with most of the boards with respect to the stable BER presented by other types of connected ONTs;
- Interoperability problem between a given type of ONT and a given type of board: a slightly but significantly increasing Bit Error Rate (BER) is found in different PON when there is no specific problem for other types of boards and ONTs in similar PONs. Conceptually, as shown at **Fig. 5****,** interoperability problems between a given type of board and a given type of ONT can be identified by an slight increase in the BER in the communication with the current type of board with respect to the stable BER presented by other types of connected ONTs;
- Physical defect: most of the ONTs, without any dependency to their manufacturers or types, belonging to a given PON branch, present significantly and highly increasing BER with respect to the common behavior occurring in other PONs. Depending on the number of impacted ONTs for a given PON, the possible location of such physical defect can be inferred. Conceptually, as shown at **Fig. 6****,** physical defects can be identified by a high increase in the BER between some ONTs and a given OLT. Inference about the location of such defects can also be performed.

It is to be noted that the present embodiment rely only on the BER parameter, while the use of other parameters, e.g. as Bit Error Counter (BEC), taken individually or combined together, is also possible.

Taken into account this knowledge learned from field results, it gets possible to propose an expert system in order to make the discrimination between the problems and to therefore provide a diagnosis engine based on the PON operational data. The building and use of the diagnosis engine is, as already mentioned above, divided as follows:
- Data collection, able to collect network-wide PON operational parameters and structure information;
- Training phase, could be performed offline, learns how to combine the operational parameters in order to provide an expert system able to perform diagnosis. Such expert system can be implemented using decision trees, Bayesian network or multivariate classification techniques;
- Testing phase, where upcoming operational parameters of selected ports request the trained expert system in order to receive a diagnosis.

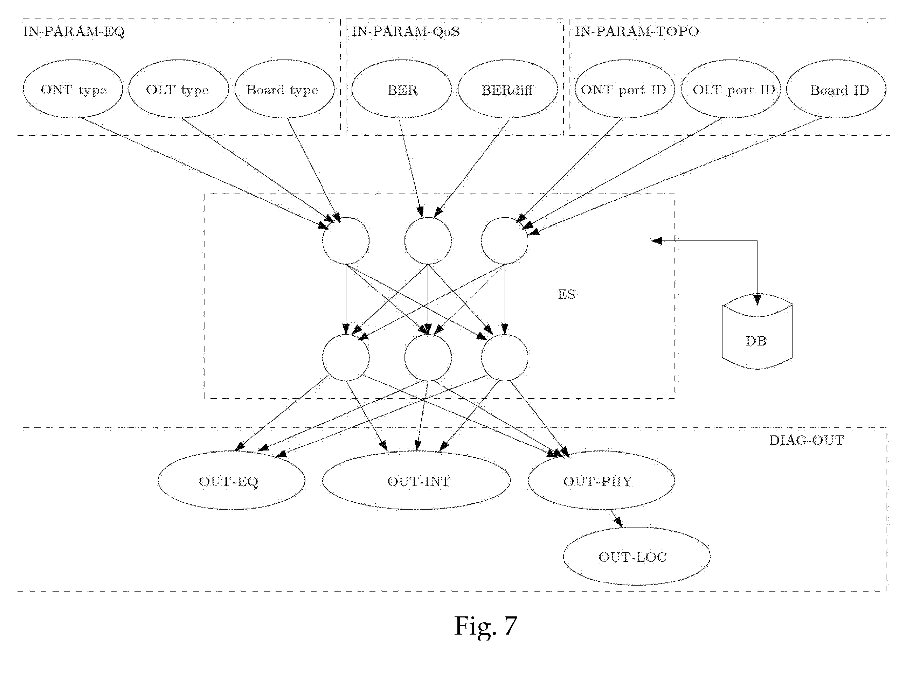

In practice, the expert system created and used by a diagnosis engine running the present fault detection method is designed using the following operational parameters as inputs:
- BER = a log10(BERus) + b log10(BERdS), 0 <= a,b <= 1
- BERdiff = a log10(BERus[t]-BERus[t-k]) + b log10(BERds[t]-BERds[t-k]), 0 <= a,b <= 1, k>=O
- ONT type
- OLT type
- Board type
- ONT port IDentifier
- OLT port IDentifier
- Board IDentifier
and get combined to return root cause diagnosis outputs from PON operational data. These diagnostic outputs comprise equipment issues, interoperability problem, physical defects location,... A representation of a possible implementation of such a diagnosis engine is schematized in **Fig. 7****.** Therein, inputs of the expert system ES consist in operational parameters of 3 different types, respectively IN-PARAM-EQ for operational parameters related to equipment types, IN-PARAM-QoS for operational parameters related to the Quality of Service and IN-PARAM-TOPO for operational parameters related to topology. These inputs correspond to operational parameters as mentioned above and belonging to a particular port. In order to provide suitable diagnosis outputs DIAG-OUT identifying different root causes, i.e. OUT-EQ for causes related to equipment issues, OUT-INT for interoperability problems, OUT-PHY for physical defects together with their location OUT-LOC, the expert system EP has to be trained. For that purpose, a database DB, containing network-wise operational parameters, is used.

The advantages of the diagnosis engine running the present fault detection method are:
- No need neither to correlate with technician tools data or previous information about optical line terminal OLT or optical network terminal ONT stored in the memory;
- No need for a theoretical model, learning is performed from network-wide field data;
- No need for statistical approach to compare measurements and technician tools data;
- No periodical measurement is required for a given optical network terminal ONT (or even the ONTs of a given OLT), a network-wide snapshot approach is used instead of single port transient analysis;
- No limitation to a given optical line terminal OLT port (together with all its ONTs) but focused on a network-wide approach. This allows broader conclusions about equipment and interoperability problems and not only problems occurring on one specific optical line terminal OLT port.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A fault detection method for an optical network in a communication system,
**characterized in that** said method comprises the steps of
- collecting operational parameters of said optical network,
- collecting information about the structure of said optical network,
- providing diagnosis outputs by a diagnosis engine analyzing the structure information and the operational parameters, and
- deriving optical network faults from said diagnosis outputs.

2. The fault detection method according to claim **1**, **characterized in that** said method further comprises the steps of storing the collected operational parameters and the collected structure information in a database (DB).

3. The fault detection method according to claim **1, characterized in that** said operational parameters are related to the equipment used in said optical network.

4. The fault detection method according to claim **1**, **characterized in that** said operational parameters are related to the Quality-of-Service of said optical network.

5. The fault detection method according to claim **1, characterized in that** said operational parameters are related to the architecture of said optical network.

6. The fault detection method according to claim **1, characterized in that** said diagnosis outputs are generated by said diagnosis engine using decision trees.

7. The fault detection method according to claim **1, characterized in that** said diagnosis outputs are generated by said diagnosis engine using Bayesian network techniques.

8. The fault detection method according to claim **1, characterized in that** said diagnosis outputs are generated by said diagnosis engine using multivariate classification techniques.

9. The fault detection method according to claim **1, characterized in that** said step of collecting information about the structure of said optical network is performed off-line.

10. A diagnosis engine for fault detection in an optical network of a communication system,
**characterized in that** said diagnosis engine is adapted to collect operational parameters and information about the structure of said optical network, and **in that** said diagnosis engine is adapted to provide diagnosis outputs from which optical network faults are derived.

11. The diagnosis engine according to claim **10, characterized in that** said diagnosis engine is associated to a database (DB) adapted to store said operational parameters and said structure information.

12. The diagnosis engine according to claim **10, characterized in that** said diagnosis engine operates according to decision trees or Bayesian network techniques.

13. The diagnosis engine according to claim **10, characterized in that** said diagnosis engine operates according to multivariate classification techniques.

14. The diagnosis engine according to claim **10, characterized in that** said diagnosis engine forms part of a network analyzer.
